(19) Europäisches Patentamt
European Patent Office
Office européen des brevets

(11) **EP 0 866 651 B1**

(12) **EUROPÄISCHE PATENTSCHRIFT**

(45) Veröffentlichungstag und Bekanntmachung des Hinweises auf die Patenterteilung:
**10.11.1999 Patentblatt 1999/45**

(21) Anmeldenummer: **96946202.7**

(22) Anmeldetag: **13.12.1996**

(51) Int. Cl.⁶: **A01B 79/00**, G01S 5/14

(86) Internationale Anmeldenummer:
**PCT/DE96/02426**

(87) Internationale Veröffentlichungsnummer:
**WO 97/21336 (19.06.1997 Gazette 1997/26)**

(54) **VERFAHREN ZUR AUTOMATISCHEN AUSBRINGUNG VON DÜNGEMMITTELN, INSBESONDERE VON KLÄRSCHLAMMFRISCHMASSE**

METHOD FOR AUTOMATICALLY APPLYING FERTILIZERS, IN PARTICULAR FRESH SEWAGE SLUDGE MATERIAL

PROCEDE D'EPANDAGE AUTOMATIQUE DE SUBSTANCES FERTILISANTES, NOTAMMENT DE MATIERES DE BOUES D'EPURATION FRAICHES

(84) Benannte Vertragsstaaten:
**AT DK ES FR GB IT**

(30) Priorität: **13.12.1995 DE 19546576**

(43) Veröffentlichungstag der Anmeldung:
**30.09.1998 Patentblatt 1998/40**

(73) Patentinhaber: **Hölzl, Hans**
**83137 Schonstett (DE)**

(72) Erfinder: **LÜTTICKEN, Ruth**
**D-83128 Halfing (DE)**

(74) Vertreter:
**Kleinschmidt, Michael, Dr.**
**Patentanwalt**
**Vorderer Anger 268**
**86899 Landsberg (DE)**

(56) Entgegenhaltungen:
**DE-A- 4 342 171     DE-A- 4 423 083**
**US-A- 5 220 876**

**Beschreibung**

Die Erfindung betrifft ein Verfahren zur automatischen Ausbringung von Düngemitteln, insbesondere von Klärschlammfrischmasse oder anderen Stoffen zur Bodenverbesserung auf landwirtschaftliche Nutzflächen, gemäß den Merkmalen des Oberbegriffs des Anspruch 1.

Aus dem Stand der Technik sind zahlreiche Vorrichtungen bekannt, mit denen Düngemittel, insbesondere Klärschlammfrischmasse oder andere Stoffe zur Bodenverbesserung auf landwirtschaftliche Nutzflächen ausgebracht werden. Wesentlich ist dabei, daß die Düngemittel nicht über der - zumeist gesetzlich - vorgesehenen Höchstmenge ausgebracht werden. Das wird dadurch erreicht, daß das Fahrzeug mit einer bestimmten Geschwindigkeit fährt und das Fördersystem für die Ausbringung der Düngemittel geschwindigkeitsabhängig eine vorgesehene Arbeitsbreite versorgt.

Wird nun der Dünger vor der Ausbringung daraufhin vorbereitet, daß die vorgesehene Menge pro Flächeneinheit in das entsprechende Ausbringungsfahrzeug eingefüllt wird, so kann damit grundsätzlich eine entsprechend vorgesehene Fläche gedüngt werden.

Dabei sind aber bestimmte Flächenstücke zu beachten, in denen nicht oder nur wesentlich weniger gedüngt werden darf als den übrigen Flächenstücken. Das kann dadurch bedingt sein, daß an bestimmten Stellen schon der zulässige Nährstoffgehalt des Bodens erreicht wurde. Es kann sich sich dabei aber auch um Flächenstücke handeln, die aus Bewirtschaftungs- und/oder Naturschutzgründen grundsätzlich von der Düngung ausgeschlossen sind (Schutzzonen), wie z.B. Busch- und Strauchgruppen, sowie Uferrandstreifen zu Gewässern (Seen, Teiche, Bäche und Flüße). Moderne Ausbringungsfahrzeuge zur Ausbringüng von Düngemitteln werden so betrieben, daß die Flächenstücke, auf denen der Dünger ausgebracht werden soll, vorvermessen und auf den Düngungsbedarf voruntersucht werden. Der eigentliche Ausbringungsvorgang geschieht dann mit Hilfe der satellitengestützten Fahrzeugnavigation. Wegen der ausgezeichneten Verfügbarkeit kommt das Global Positioning System (GPS) zum Einsatz, das dann bezüglich seiner absoluten Genauigkeit nochmals verbessert eingesetzt wird, indem eine ortsnahe Referenzstation zusätzliche Korrekturdaten übermittelt. Dieses Verfahren ist unter der Bezeichnung differentielles GPS (DGPS) bekannt.

Dabei wird mit einer ausgezeichneten Genauigkeit die Position des Ausbringungsfahrzeuges ermittelt. Zudem wird die Geschwindigkeit auf der Erde in voller vektorieller Darstellung, also mit drei Komponenten angegeben. Diese drei Komponenten können z.B. die Nordgeschwindigkeit, die Ostgeschwindigkeit und die bei dieser Anwendung weniger interessante Vertikalgeschwindigkeit sein. Abhängig von der Position und der gerichteten Geschwindigkeit können nun die bekannten Systeme zur Steuerung der Ausbringungsmenge angesteuert werden. Ein solches Fahrzeug ist aus der DE-A-4 423 083 bekannt.

Dabei tritt aber ein Problem auf, das sich zunächst einmal leicht lösen läßt. Die Ausbringungssollmenge ist nämlich nicht nur von der Position des Fahrzeuges abhängig, sondern auch vom zeitlichen Versatz der Position, also von der voraussichtlichen Position in einem zukünftigen Zeitintervall. Normalerweise kann diese zukünftige Position durch die Propagation der tatsächlichen, vom Satellitennavigationssystem bestimmten Position mit Hilfe der ebenfalls satellitenbestimmten vektoriellen Geschwindigkeit vorausberechnet werden. Dabei ist

$$P_p \;=\; P_i \;+\; V_i \;*\; \triangle T/2$$

wobei $P_p$ die propagierte mittlere Position im nächsten Zeitintervall $\triangle T$ und die mit der Richtung i indizierte Parameter die tatsächliche Position und Geschwindigkeit ist. Die oben angegebene Gleichung ist vektoriell zu verstehen, sie gilt also in den oben angegebenen drei Komponenten. Wenn nun das Ausbringungsfahrzeug eine beschleunigte Bewegung ausführt, so ist ein Korrekturfaktor für die Beschleunigung notwendig, entsprechend der Gleichung

$$P_p \;=\; P_i \;+\; V_i \;*\; \triangle T/2 \;+\; A_i \;*\; \triangle T^2/2$$

wobei A die mit der Richtung i indizierte Beschleunigung, also die Änderung der Geschwindigkeit in der Zeiteinheit sei. Auch diese Größe ist zumindestens in den Komponenten eines erdgebundenen Koordinatensystems (z.B. Nord/Ost) zu kennen. Der Satellitennavigationsempfänger kann im Allgemeinen die Beschleunigung aus der zeitlichen Änderung der Geschwindigkeit komponentenweise bestimmen. Das für den allgemeinen Fall bereits durch den Satellitennavigationsempfänger selbst lösbare Problem bleibt aber in einem besonderen, allerdings im Lichte der oben angegebenen spezifischen Bedingungen der Ausbringung von Dünger bedeutenden Fall ungelöst. Wenn nämlich das Fahrzeug steht und erst wieder anfahren soll oder aber sich mit kleiner Geschwindigkeit bewegt und dann beschleunigt wird, so ist die vom Satellitennavigationssystem bestimmte Geschwindigkeit entweder null oder aber sehr klein. In beiden Fällen ist eine Propagation der Position nach dem oben aufgezeigten Verfahren nicht möglich, da eine Richtung entweder nicht vorliegt oder aber durch die kleine Geschwindigkeit äußerst ungenau ist.

2

Wenn das Fahrzeug also in der Nähe einer Schutzzone im obigen Sinne steht, so kann alleine mit Hilfe des angegebenen Verfahrens nicht bestimmt werden, ob und wie weit die Streuklappen geöffnet und ob und wie schnell die Förderschnecken betrieben werden dürfen, wenn z.B. ein solches System die Menge der auszubringenden Düngemittel steuert. Eine Bestimmung der Fahrzeugrichtung aus vorangemessenen Daten des Satellitennavigationssystems ist nicht möglich, da das Fahrzeug auf der Stelle gedreht worden sein kann und die letzte Geschwindigkeitsmessung auch in Bezug auf die Richtung insofern überholt ist.

Gerade in der Nähe der Schutzflächen tritt aber das oben genannte Problem besonders häufig auf, da eben hier Ausweich- und Wendemanöver mit kleinsten Geschwindigkeiten notwendig sind.

Die Erfindung hat also die Aufgabe, ein Verfahren zur Ausbringung von Dünger, insbesondere von Klärschlammfrischmasse oder ähnlichen organischen Düngemitteln, mit einem Steuerungssystem zur Verfügung zu stellen, welches das oben angegebene Problem löst.

Diese Aufgabe löst die Erfindung durch ein Verfahren entsprechend Anspruch 1. Dabei haben die Maßnahmen der Erfindung zunächst einmal zur Folge, daß zu jedem Zeitpunkt und an jeder Position die Steuerungssysteme zur Ausbringung von Dünger an die zukünftige Position des Fahrzeuges angepaßt werden kann, unabhängig davon ob das Fahrzeug eine momentane Geschwindigkeit aufweist oder nicht. Damit stellt die Erfindung ein Fahrzeug zur Verfügung, mit dem die umweltrelevanten Anforderungen auch in den Fällen erfüllt werden können, wenn die nach dem Stand der Technik bekannten Fahrzeuge versagen.

Weitere vorteilhafte Ausgestaltungen der Erfindung sind in den Unteransprüchen festgelegt. Dabei ist es vorteilhaft, daß auch kleinste Geschwindigkeiten, die vom Satellitennavigationssystem nicht oder nur noch zu ungenau bestimmt werden könne, mit Hilfe eines radargestützten Geschwindigkeitssensor gemessen werden. Als Richtungsanzeige kann ein Magnetkompass dienen, der entfernt von den das Erdmagnetfeld störenden Metallteilen angebracht ist. Es kommt aber auch eine dreiachsige Magnetsonde in Frage. Für die Satellitennavigation eignet sich das GPS, insbesondere das differentielle GPS in besonderem Maße. Es kommen aber auch alternative Systeme, gegebenenfalls in Kombination mit dem GPS, z.B. das russische GLONAS-System in Frage.

Die vorgenannten sowie die beanspruchten und in dem nachfolgenden Ausführungsbeispiel beschriebenen, erfindungsgemäß zu verwendenden Elemente und Verfahrensschritte unterliegen in ihrer Größe, Formgestaltung und technischen Konzeption keinen besonderen Ausnahmebedingungen, sodaß die in dem jeweiligen Anwendungsgebiet bekannten Auswahlkriterien, insbesondere bei dem auf den Boden auszubringenden Stoff unabhängig davon, ob es sich um organische oder mineralische Düngemittel handelt, uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnung, in der - beispielhaft - ein Verfahren dargestellt ist.

Kurze Beschreibung der Zeichnungen

In der Zeichnung zeigt:

Fig. 1 ein Fahrzeug mit den Sensoren entsprechend dem Ausführungsbeispiel.

Fig. 2 einen Ablauf des erfindungsgemäßen Verfahrens.

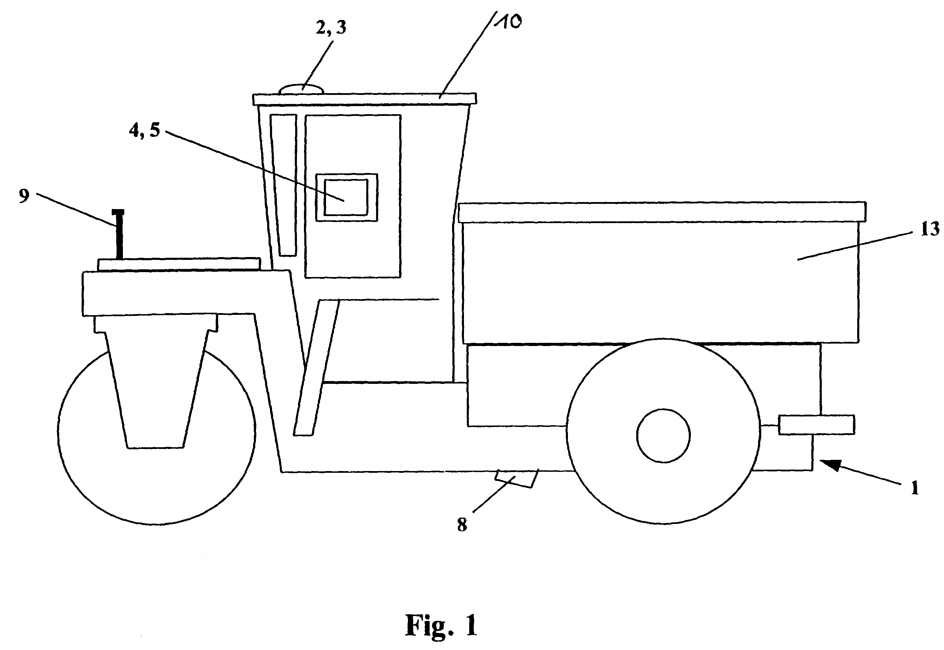

Das in Fig. 1 gezeigte Fahrzeug zur Ausbringung von Düngern, insbesondere von Klärschlammfrischmasse, weist eine Satellitennavigationsanlage 2 zum Empfang von Navigationsdaten des Global Positioning Systems (GPS) auf, wobei sich eine Empfangsantenne 3 auf dem Fahrzeugdach 10 und eine Empfangseinrichtung 4 im Fahrzeug 1 in der Nähe einer Steuerungseinrichtung 5 befindet. Die als Rechner ausgebildete Steuerungseinrichtung 5 hat nicht nur die Aufgabe, die Navigationsdaten zu speichern und zu propagieren, sondern auch, die als Öffnungsklappen 6 und Förderschnecken 7 ausgebildeten Steuerungselemente zur Steuerung der Ausbringungsmenge an Düngemittel aus einem Behälter 13 zu steuern. Diese Steuerungselemente bestehen im Ausführungsbeispiel aus beidseitig am Fahrzeug angebrachten Öffnungsklappen 6 sowie aus Förderschnecken 7, wobei die Geschwindigkeit der Förderschnecken 7 und die Öffnungsstellung der Klappen 6 die Ausbringungsmenge festlegen.

Die Steuerungseinrichtung 5 zur Öffnung der Klappen 6 und zur Antriebssteuerung der Förderschnecken 7 ist so eingestellt, daß für eine vorbestimmte Zeiteinheit von 1 Sekunde die voraussichtliche mittlere Position und die in dieser Zeiteinheit von der Ausbringungseinrichtung überdeckte Fläche mit Hilfe der von der Satellitennavigationsanlage 2 gelieferten Navigationswerte bestimmt wird und anhand der Solldaten für diese Fläche die Steuerungseinrichtungen 6 und 7 des Ausbringungsfahrzeuges 1 so eingestellt werden, daß die für diese Fläche bestimmte Menge an Düngemittel ausgebracht wird. Sie ist weiterhin so eingerichtet, daß die Förderschnecken 7 zum Stillstand kommen und die Klappen 6 geschlossen werden, wenn z.B. das Fahrzeug an einer zu schützenden Buschgruppe vorbeifährt. In diesem Falle werden, wenn die Buschgruppe nur auf einer Seite des Fahrweges steht, nur die zu dieser Seite gerichtete Klappe 6 geschlossen.

Zusätzlich weist das Fahrzeug einen Radarsensor 8 zur erdoberflächenbezogenen Geschwindigkeitsmessung und einen Magnetkompass 9 auf, deren Meßdaten ebenfalls der Steuerungeinrichtung 5 zugeführt werden. Der Magnetkompass ist als zweiachsiger, selbsthorizontierender Magnetkopmpass ausgebildet. Alternativ kann aber auch eine dreiachsige Magnetsonde eingesetzt werden. Die Steuerungeinrichtung ist so ausgelegt, daß bei kleinen Geschwindigkeiten, bei denen eine Geschwindigkeitsmessung des Satellitennavigationssystems 2,3 nicht zuverlässig sein kann, die Daten des Radarsensors 8 und des Magnetkompasses benutzt werden. Die Steuerungseinrichtung 5 ist weiterhin so eingerichtet, daß beim Stillstand und beim Anfahrvorgang die vom Magnetkompass 9 gemessene Richtung zur Steuerung der Klappen 6 und der Förderschnecken 7 verwendet werden.

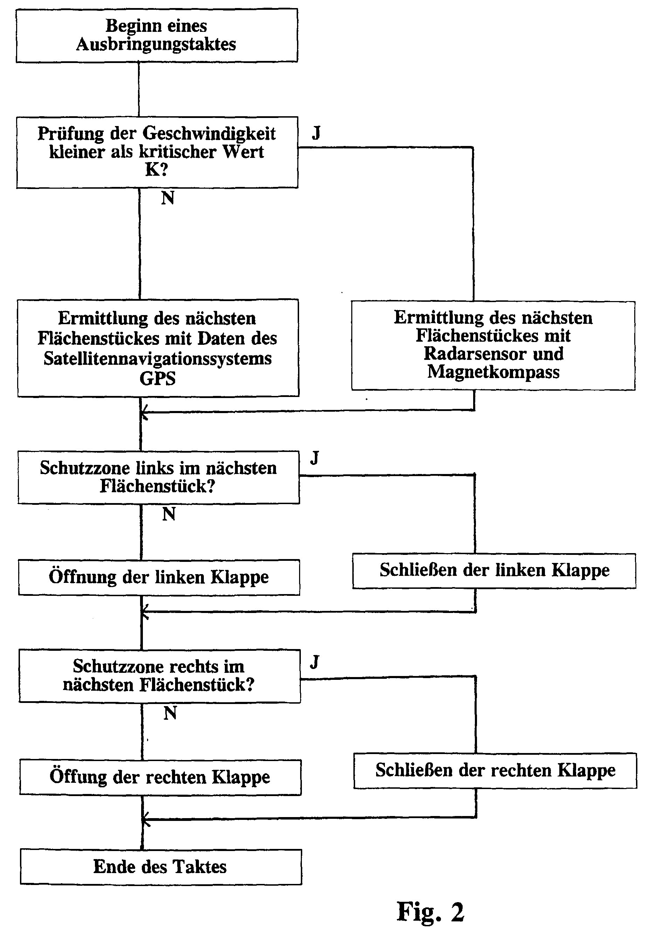

Das erfindungsgemäße Verfahren wird anhand von Figur 2 erläutert: Wenn die Fahrzeugbewegung unter einen kritischen Wert K verlangsamt wird, unterhalb dessen eine Richtungsbestimmung alleine mit den satellitengestützten Navigationsdaten nicht mehr zuverlässige ist, so wird die Steuerungseinrichtung 5 auf den Betrieb mit Hilfe der weiterhin zur Verfügung stehenden Positionsdaten des Satellitennavigationsempfängers, aber mit den Geschwindigkeitsdaten des Radarsensors 8 und des Magnetkompasses 9 weiterbetrieben, wobei aus diesen beiden Daten eine Richtung und eine Geschwindigkeit erdbezogenen (nord/ostbezogenen) bereitgestellt wird.

Vor jedem Anfahrvorgang in der Nähe eines Schutzbereiches wird mit Hilfe der Fahrzeugposition, der Fahrzeugrichtung und der darauf senkrecht stehenden Ausbringungsrichtungen festgestellt, ob eine Ausbringung zu der jeweiligen Seite zulässig ist und die Steuerungselemente 6 und 7 werden entsprechend eingestellt. Im vorliegenden Ausführungsbeispiel werden dabei die Klappen 6 in einer oder beiden Richtungen geschlossen und die Förderung in diese Richtung unterbrochen.

Das Steuerungssystem ist in einer alternativen Ausführungsform der Erfindung kann aber auch in der Lage sein, mit Hilfe der Öffnungsstellung der Klappen 6 die Arbeitsbreite in den beiden Ausbringungsrichtungen verschieden zu wählen, sodaß auch eine etwas entfernte Schutzzone dadurch ausgespart werden kann, daß auf der einen Seite die volle Arbeitsbreite gewählt wird, während durch eine kurzfristige Verringerung der Arbeitsbreite auf der anderen Seite ein bestimmter Bereich ausgespart wird. Dabei kann auf dieser Seite aber ein näherliegender Bereich durchaus gedüngt werden. Diese Möglichkeit ergibt weitere Vorteile insbesondere in Verbindung mit der Betriebsart, bei der z.B. im Anfahrvorgang mit Hilfe der zusätzlichen Richtungsmessung (Magnetkompass 8) bestimmt wird, ob eine Ausbringung zulässig ist. Dieser Vorteil liegt darin, daß auf der einen Seite die Ausbringung planmäßig fortgeführt werden kann und eine teilweise Wiederholung der Ausbringung vermieden wird. Dies ist die bevorzugte Betriebsart entsprechend der Erfindung.

Besonders vorteilhaft gestaltet sich das Verfahren, wenn die Zeit, in der durch eine Geschwindigkeit oberhalb des kritischen Wertes K eine Bestimmung von Geschwindigkeit und Richtung des Fahrzeuges alleine mit Hilfe der satellitengestützten Navigationsdaten möglich ist, dazu genutzt wird, den Radarsensor 8 und/oder den Magnetkompass 9 fortlaufend zu kalibrieren bzw. zu kompensieren.

**Patentansprüche**

1. Verfahren zum Ausbringen von Düngemitteln, insbesondere von Klärschlammfrischmasse (2) auf den Boden auf landwirtschaftlichen Nutzflächen aus einem Fahrzeug (1), mit Hilfe von Mitteln (13) zur Aufnahme der Düngemittel, Mittel (6, 7) zum Ausbringen der Düngemittel aus den Mitteln (13) zur Aufnahme der Düngemittel auf den Boden und Mittel (5) zur Steuerung der Ausbringungsmenge des Düngemittels aus dem Fahrzeugs (1), wobei das Mittel (5) zur Steuerung der Ausbringungsmenge von Düngemittel abhängig von der mit Hilfe von Satellitennavigation bestimmten Position und vorbestimmten Ausbringungssolldaten gesteuert wird,
dadurch **gekennzeichnet**, daß

das Mittel (5) zur Steuerung der Ausbringungsmenge von Düngemittel zusätzlich zu der von der mit Hilfe von Satellitennavigation bestimmten Position und vorbestimmten Ausbringungssolldaten mit der mit Hilfe von Satellitennavigation bestimmten Geschwindigkeit des Fahrzeugs gesteuert wird, wenn die Fahrzeuggeschwindigkeit einen bestimmten Wert erreicht oder überschreitet, jedoch mit Hilfe der von Satellitennavigation bestimmten Position und der von weiteren Mitteln (8) zur Messung der Fahrzeuggeschwindigkeit und Mitteln (9) zur Messung der Fahrzeugrichtung gesteuert wird, wenn die Fahrzeuggeschwindigkeit den bestimmten Wert nicht erreicht.

2. Verfahren nach Anspruch 1, dadurch gekennzeichnet, daß als weitere Mittel (8) zur Bestimmung der Fahrzeuggeschwindigkeit zumindestens ein Radarsensor verwendet wird.

3. Verfahren nach Anspruch 1 oder 2, dadurch gekennzeichnet, daß als Mittel (9) zur Bestimmung der Fahrzeugrichtung ein Magnetkompass verwendet wird.

**4.** Verfahren nach Anspruch 3, dadurch gekennzeichnet, daß als Magnetkompaß (9) ein von allen metallischen Fahrzeugteilen entfernt angebrachter Fernkompass verwendet wird.

**5.** Verfahren nach Anspruch 3 oder 4, dadurch gekennzeichnet, daß als Magnetkompass (9) eine dreiachsige Magnetsonde verwendet wird.

**6.** Verfahren nach einem der Ansprüche 1 bis 5, dadurch gekennzeichnet, daß die Mittel (2, 3, 4) zur Erfassung der Position und Geschwindigkeit des Fahrzeugs mit Satellitennavigation vom Global Positioning System gestützt werden.

**7.** Verfahren nach Anspruch 6, gekennzeichnet durch den Einsatz des differentiellen GPS.

**8.** Verfahren nach einem der Ansprüche 1 bis 7, dadurch gekennzeichnet, daß die Mittel (5) zur Steuerung der Ausbringungsmenge von Düngemittel die Menge an Düngemittel zu jeder Seite des Fahrzeugs (1) unabhängig steuern.

## Claims

**1.** A process to discharge fertilizer, especially fresh sewage sludge (2) on arable agricultural soil from a vehicle (1) using means (13) to hold the fertilizer, means (6, 7) to discharge the fertilizer on the soil from the means (13) to hold the fertilizer, and means (5) to control the discharged amount of fertilizer from the vehicle (1), whereby the means (5) to control the discharged amount of fertilizer depends on the position determined by satellite navigation and preset discharge data, characterized in that the means (5) to control the discharged amount of fertilizer are controlled by the speed of the vehicle using satellite navigation in addition to the position determined by the satellite navigation when a certain vehicle speed is reached or exceeded, and the means (5) are further controlled by the position determined by satellite navigation and other means (8) to measure the vehicle speed and means (9) to measure the vehicle direction when the vehicle speed does not reach the specific value.

**2.** A process according to claim 1, characterized in that at least one radar sensor is used as the additional means (8) to determine the vehicle speed.

**3.** A process according to claims 1 or 2, characterized in that a magnetic compass is used as the means (9) to determine the vehicle speed.

**4.** A process according to claim 3, characterized in that a remote compass is used as the magnetic compass (9) that is distant from all metal vehicle parts.

**5.** A process according to claims 3 or 4, characterized in that a three-axis magnetic probe is used as the magnetic compass (9).

**6.** A process according to one of claims 1-5, characterized in that means (2, 3, 4) to detect the position and speed of the vehicle are supported by the satellite navigation of the global positioning system.

**7.** A process according to claim 6, characterized by the use of differential GPS.

**8.** A process according to one of claims 1-7, characterized in that the means (5) to control the discharged amount of fertilizer independently control the amount of fertilizer on each side of the vehicle (1).

## Revendications

**1.** Procède d'épandage de substances fertilisantes, en particulier d'une masse de boues de curage fraîche (2), sur le sol, sur des surfaces d'exploitation agricole, à partir d'un véhicule (1), à l'aide de moyens (13) réceptionnant les substances fertilisantes, de moyens (6, 7) pour épandre sur le sol les substances fertilisantes, à partir des moyens (13) réceptionnant les substances fertilisantes, et de moyens (5) pour réguler la quantité de substance fertilisante à épandre à partir du véhicule (1), le moyen (5) servant à réguler la quantité de substance fertilisante à épandre étant commandé en fonction de la position déterminée à l'aide de la navigation par satellites et des données d'épandage théoriques déterminées préalablement, caractérisé en ce qu'en plus d'être commandé par la position déterminée à l'aide de la navigation par satellites et par les données d'épandage théoriques déterminées au préalable, le moyen (5) permettant une régulation de la quantité de substance fertilisante à épandre est commandé au moyen de la vitesse du véhicule déterminée à l'aide de la navigation par satellites, lorsque la vitesse du véhicule atteint ou dépasse une valeur déterminée, et est commandé à l'aide de la position déterminée par la navigation par satellites et par d'autres moyens (8) de mesure de la vitesse du véhicule et des moyens (9) de mesure de la direction du véhicule, si la vitesse du véhicule n'atteint pas la valeur déterminée.

2. Procédé selon la revendication 1, caractérisé en ce que comme autre moyen (8) permettant de déterminer la vitesse du véhicule, on utilise au moins un détecteur radar.

3. Procédé selon la revendication 1 ou 2, caractérisé en ce que comme moyen (9) permettant de déterminer la direction du véhicule, on utilise un compas magnétique.

4. Procédé selon la revendication 3, caractérisé en ce que comme compas magnétique (9), on utilise un télécompas placé à l'écart de toutes les parties métalliques du véhicule.

5. Procédé selon la revendication 3 ou 4, caractérisé en ce que comme compas magnétique (9) on utilise une sonde magnétique à trois axes.

6. Procédé selon l'une des revendications 1 à 5, caractérisé en ce que les moyens (2, 3, 4) permettant de détecter la position et la vitesse du véhicule par la navigation par satellites sont appuyés par le Global Positioning System.

7. Procédé selon la revendication 6, caractérisé par la mise en oeuvre du GPS différentiel.

8. Procédé selon l'une des revendications 1 à 7, caractérisé en ce que les moyens (5) permettant de réguler la quantité de substance fertilisante à épandre régulent la quantité de substance fertilisante indépendamment, de chaque côté du véhicule (1).

Fig. 1

Beginn eines
Ausbringungstaktes

Prüfung der Geschwindigkeit
kleiner als kritischer Wert
K?                              J

N

Ermittlung des nächsten
Flächenstückes mit Daten des
Satellitennavigationssystems
GPS

Ermittlung des nächsten
Flächenstückes mit
Radarsensor und
Magnetkompass

Schutzzone links im nächsten
Flächenstück?               J

N

Öffnung der linken Klappe

Schließen der linken Klappe

Schutzzone rechts im
nächsten Flächenstück?      J

N

Öffung der rechten Klappe

Schließen der rechten Klappe

Ende des Taktes

**Fig. 2**